# EUROPÄISCHE PATENTANMELDUNG

(11) **EP 2 028 386 A1**
(43) Veröffentlichungstag der Anmeldung: **25.02.2009**
(21) Anmeldenummer: 08156817.2
(22) Anmeldetag: 23.05.2008
(51) Int. Cl.: F16D 23/02

(54) **Synchronring für eine Synchronisierungseinrichtung, Reibbelag-Rohling, sowie Verfahren zur Herstellung eines Synchronrings**

(30) Priorität: 23.08.2007 EP 07114870
(71) Anmelder: Sulzer Euroflamm Germany GmbH, 28719 Bremen (DE)
(72) Erfinder: Christoffer, Ulf, 28717, Bremen (DE); Spreckels, Marcus, Dr., 28876 Oyten (DE)
(74) Vertreter: Gernet, Samuel Andreas

(57) **Zusammenfassung**

Die Erfindung betrifft einen Synchronring (1) für eine Synchronisiereinrichtung eines Zahnräderwechselgetriebes, umfassend einen Synchronringkörper (2) mit einem an einer Reibfläche (3) vorgesehen Reibbelag (4) der Dicke (D), welcher Reibbelag (4) in einer vorgebbaren Breite (b) zwischen einer ersten axialen Begrenzungsfläche (41) des Reibbelags (4) und einer zweiten axialen Begrenzungsfläche (42) des Reibbelags (4) derart in Umfangsrichtung (5) um eine axiale Synchronringachse (6) des Synchronrings an der Reibfläche (3) vorgesehen ist, dass sich der Reibbelag (4) unter einem vorgebbaren Reibwinkel (α) konisch um die Synchronringachse (6) erstreckt. Dabei ist im Reibbelag (4) zur Aufnahme und / oder zum Transport eines Fluids eine makrogeometrische Nut (7) derart vorgesehen, dass für das Fluid eine Strömungsverbindung zwischen der ersten axialen Begrenzungsfläche (41) und der zweiten axialen Begrenzungsfläche (42) durch die makrogeometrische Nut (7) geschaffen ist. Erfindungsgemäss ist im Bereich der makrogeometrischen Nut (7) der Reibbelag (4) vollständig entfernt. Die Erfindung betrifft weitern einen Reibbelag-Rohling (400) zur Herstellung eines Synchronrings (19, sowie ein Verfahren zur Herstellung eines erfindungsgemässen Synchronrings (1).

## Beschreibung

Die Erfindung betrifft einen Synchronring, im Speziellen einen Innensynchronring oder einen Aussensynchronring für eine Synchronisiereinrichtung eines schaltbaren Zahnräderwechselgetriebes, einen Reibbelag-Rohling, sowie ein Verfahren zur Herstellung eines solchen Synchronrings gemäss dem Oberbegriff des unabhängigen Anspruchs der jeweiligen Kategorie.

Synchronringe dienen in einem mechanischen oder automatisch schaltbaren Zahnräderwechselgetriebe, z.B. in Fahrzeuggetrieben dazu, die während eines Gangwechsels auftretenden Relativgeschwindigkeiten zwischen Gangrad und Getriebewelle aneinander anzugleichen. Die Synchronisation wird dabei durch Reibung zwischen den entsprechenden Reibpartner erzielt. Die Funktionsweise solcher Getriebe und der Ablauf des Synchronisationsvorgangs sind an sich bekannt und brauchen dem Fachmann hier nicht mehr näher erläutert zu werden.

Zum Schutz gegen vorzeitigen Verschleiss und / oder zur Verbesserung der Reibcharakteristik ist es bekannt, die Reibflächen von Synchronringen, die in der Regel aus einem Metall oder einer Metallegierung, wie beispielsweise aus Messing oder Stahl gefertigt sind, mit einer Reibschicht zu versehen. Dabei sind ganz verschiedene Typen von Reibschichten im Gebrauch, z.B. thermische Spritzschichten aus Molybdän, Carbon-Reibschichten oder Reibschichten aus anderen Materialien.

Durch die immer grösser werdenden Belastungen, die im Betriebszustand auf die Synchronringe einwirken, sind auch immer grössere Anforderungen an die Eigenschaften der Reibflächen gestellt.

Dabei etablieren sich neben z.B. mittels thermischen Beschichtens behandelter Synchronringe, in letzter Zeit immer mehr solche Synchronringe, deren Reibflächen mit einem aufgeklebten Reibbelag versehen sind, der z.B. aus einem Karbon-Werkstoff besteht. Solche Reibbeläge werden in grösseren Streifen oder Matten aus gewebtem, geflochtenem oder anders bearbeiteten Karbonausgangswerkstoffen, insbesondere aus Karbonfasern hergestellt, die in an sich dem Fachmann wohlbekannter Weise meist mit einem Kunstharz getränkt und thermisch und mechanisch vorbehandelt werden, so dass ein genügend resistenter Karbon Belagswerkstoff entsteht, der den enormen Anforderungen im Betriebszustand in Bezug auf Reibung, Temperatur usw. standhält.

Aus den so hergestellten Streifen oder Matten werden dann die Reibbeläge in der benötigten Geometrie herausgearbeitet, z.B. herausgestanzt oder herausgeschnitten, und anschliessend meist unter hohem mechanischen Druck mit einem geeigneten Kleber mit einem meist metallischen Synchronringkörper verbunden.

Auch diese Verfahren sind inzwischen wohlbekannt und z.B. unter anderem in der WO 2005/036006 A1 beschrieben.

Ein wohlbekanntes Problem im Zusammenhang mit der Ausgestaltung von Synchronringen, mit dem man ganz allgemein beim Synchronisiervorgang konfrontiert ist, resultiert daraus, dass die Sperrwirkung beim Synchronisierungsvorgang dadurch vermindert werden kann, dass sich zwischen den beteiligten Reibkörpern ein Schmiermittelfilm ausbildet, woraus ein hydrodynamischer Druckaufbau zwischen den Reibpartner resultieren kann, der die Reibungskräfte zwischen den Reibpartnern drastisch reduzieren kann, was die bekannten negativen Auswirkungen auf den Synchronisierungsvorgang hat.

Daher ist es z.B. bei Synchronringen, die thermisch aufgespritzt Reibfläche haben, bekannt, in die thermische Spritzschicht axial durchgehende Nuten einzubringen, durch die das Schmiermittel, also z.B. Schmieröl, in axialer Richtung zwischen den Reibpartnern hindurchfliessen kann, also von einer Seite des Synchronrings entlang der axialen Richtung bis auf die andere Seite des Synchronrings durchströmen kann, selbst dann, wenn der Synchronring mit seinem entsprechenden Reibpartner in engem reibenden Kontakt steht.

Dadurch ist nicht nur gewährleistet, dass der Schmierölfilm zwischen den Reibpartnern beim Synchronisiervorgang in die durchgehenden Nuten verdrängt werden kann, und, da die Nuten durchgehend sind, auch aus diesen Nuten weiter abfliessen kann, so dass kein Rückstau von Schmiermittel zwischen den Reibpartnern entsteht.

Die Nuten dienen nämlich gleichzeitig als Vorratstaschen für Schmiermittel, das, wie allgemein bekannt ist, im Betriebszustand auch eine wichtige Funktion als Kühlmittel übernimmt.

Diese an sich sehr bewährte Lösung liess sich jedoch bisher auf Synchronringe, die einen aufgeklebten Reibbelag, z.B. einem aus einem Karbon Werkstoff hergestellten Reibbelag, nicht übertragen.

Der Hauptgrund liegt in dem bereits oben beschriebenen Herstellungsverfahren solcher Synchronringe. Die Reibbeläge werden, wie oben erläutert, in Form von Streifen geometrisch passend für eine Reibfläche eines bestimmten Synchronringtyps hergestellt, und dann meist unter starkem mechanischen Pressen, meist auch unter erhöhter Temperatur, mit einem Kleber mit dem Synchronringkörper verklebt.

Es liegt auf der Hand, dass die Streifen, die den Reibbelag bilden sollen, vor dem Verkleben nicht mit durchgehenden Nuten in der vollen Dicke des Reibbelags versehen werden können, da der Streifen dann in einzelne Reibbelagssegmente zerfallen würde, die alle einzeln enorm aufwendig, insbesondere um kontrollierte hydrodynamische Verhältnisse garantieren zu können, unter Einhaltung höchster Präzision mit dem Synchronring verklebt werden müssten, was bisher technisch ein unlösbares Problem darstellt. Selbst wenn unter Einsatz eines enormen apparativen Aufwands ein solches Verfahren durchführbar wäre, wäre es für die Massenproduktion mit Sicherheit ökonomisch nicht tragbar.

Ein erster Lösungsansatz für diese Problematik ist asu der oben bereits erwähnten WO 2005/036006 A1 bekannt, deren Inhalt hiermit als Teil dieser Anmeldung aufgenommen wird.

Die angebotene Lösung besteht dabei darin, dass über die gesamte Breite des Reibbelags durchgehende Nuten vorgesehen werden, die jedoch zumindest abschnittsweise nicht in der vollen Dicke des Reibbelags ausgebildet sind. Das heisst, in den Nuten sind Bereiche in Form von Brücken vorgesehen, so dass der Streifen, der auf einen Synchronringkörper als Reibbelag aufgeklebten werden soll, über die Nuten durch die Brücken immer noch zusammenhängt, so dass der Streifen trotz der Nuten nicht in einzelne Reibbelagssegmente zerfällt, sondern zusammenhängend und als ganzes in bekannter Weise mit dem Synchronringkörper verklebt werden kann.

Es versteht sich, dass das zwar bereits eine enorme Verbesserung darstellt, jedoch begrenzen die Brücken in den Nuten letztendlich einerseits die Menge an Schmieröl, das pro Zeit durch die Nuten verdrängt werden kann, was besonderes bei sehr schnellen Schaltvorgängen von erheblichem Nachteil sein kann, andererseits kann natürlich auch weniger Schmieröl in den Nuten gespeichert werden, das z.B. zur Kühlung des Synchronrings benötigt wird.

Darüber hinaus ist die Herstellung der Streifen gemäss WO 2005/036006 A1 relativ aufwendig, da zur Herstellung der Nuten und Brücken mehrere verschiedene Arbeitsgänge erforderlich macht, wodurch die Herstellung relativ aufwendig und damit teuer werden kann.

Die Aufgabe der Erfindung ist es daher, einen verbesserten Synchronring mit einem Reibbelag, sowie ein Verfahren zur Herstellung eines solchen verbesserten Synchronrings bereit zustellen, mit welchem ein hydrodynamischer Druckaufbau zwischen dem Synchronring und seinem Reibpartner besser als im Stand der Technik verhindert werden kann, wobei gleichzeitig die Kühlung des Synchronrings durch ein Fluid, insbesondere durch Schmieröl erheblich verbessert wird, und gleichzeitig eine sehr einfache und wirtschaftliche Herstellung des Synchronrings garantiert ist.

Die diese Aufgaben lösenden Gegenstände der Erfindung sind durch die Merkmale der unabhängigen Ansprüche 1, 8 und 14 gekennzeichnet.

Die jeweiligen abhängigen Ansprüche beziehen sich auf besonders vorteilhafte Ausführungsformen der Erfindung.

Die Erfindung betrifft somit einen Synchronring für eine Synchronisiereinrichtung eines Zahnräderwechselgetriebes, umfassend einen Synchronringkörper mit einem an einer Reibfläche vorgesehen Reibbelag der Dicke D, welcher Reibbelag in einer vorgebbaren Breite zwischen einer ersten axialen Begrenzungsfläche des Reibbelags und einer zweiten axialen Begrenzungsfläche des Reibbelags derart in Umfangsrichtung um eine axiale Synchronringachse des Synchronrings an der Reibfläche vorgesehen ist, dass sich der Reibbelag unter einem vorgebbaren Reibwinkel konisch um die Synchronringachse erstreckt. Dabei ist im Reibbelag zur Aufnahme und / oder zum Transport eines Fluids eine makrogeometrische Nut derart vorgesehen, dass für das Fluid eine Strömungsverbindung zwischen der ersten axialen Begrenzungsfläche und der zweiten axialen Begrenzungsfläche durch die makrogeometrische Nut geschaffen ist. Erfindungsgemäss ist im Bereich der makrogeometrischen Nut der Reibbelag vollständig entfernt.

Im Rahmen dieser Anmeldung wird dabei unter dem Begriff "makrogeometrische Nut" eine Nut verstanden, die in einen Reibbelag in makroskopischen Dimensionen z.B. durch Pressen, Ausstanzen, Ausschneiden oder andere Massnahmen eingearbeitet ist. Der Begriff dient somit zur Abgrenzung von Kanälen auf kleineren geometrischen Skalen, die insbesondere als Oberflächen- oder auch als räumliche Gewebestrukturen vor allem in Karbon Werkstoffen immer mehr oder weniger stark vorhanden sind, und ebenfalls, jedoch in viel geringerem Masse als makrogeometrische Nuten, zum Weiterleiten bzw. Speicherung eines Fluids wie Schmieröl dienen können.

Ein erfindungsgemässer Synchronring kann dabei sowohl als Innensynchronring als auch als Aussensynchronring ausgestaltet sein, d.h. es kann eine äussere Umfangsfläche und / oder eine innere Umfangsfläche als Reibfläche ausgestaltet sein.

Bevorzugt erstreckt sich dabei die makrogeometrische Nut konisch unter dem Reibwinkel in Richtung der axialen Synchronringachse, wobei in einem anderen speziellen Ausführungsbeispiel sich die makrogeometrische Nut auch schräg unter einem Neigungswinkel zur Synchronringachse erstrecken kann.

Insbesondere zur Erhöhung der Kühlung des Synchronrings mittels eines Fluids, z.B. mittels Schmieröl kann zusätzlich im Reibbelag eine Vorratstasche zur Aufnahme und / oder Speicherung des Fluids vorgesehen sein.

Auch kann, wie aus dem Stand der Technik an sich bekannt, zusätzlich zu den makrogeometrischen Nuten der gemäss der vorliegenden eine Durchflussfurche zwischen der ersten axialen Begrenzungsfläche und der zweiten axialen Begrenzungsfläche in einer Oberfläche des Reibbelags vorgesehen werden.

Der Reibbelag als solches ist besonders bevorzugt aus einem Verbundwerkstoff, im speziellen aus einem mit einem Harz versetzten bzw. verstärkten Karbonwerkstoff, insbesondere aus einem gewebten und / oder geflochtenen und / oder anders gefertigten Karbonwerkstoff aufgebaut.

Der Synchronringkörper kann z.B. aus einem Stahl, vorzugsweise aus C55, C80 oder C80M Stahl, insbesondere aus C35 oder C45 Stahl und / oder einer geeigneten Metalllegierung, z.B. aus Messing gefertigt sein und ist dabei bevorzugt ein spanlos, aus einem dünnwandigen Stahlband geformter Synchronringkörper, der als ein tiefgezogenes Bleichteil ausgebildet ist.

Weiterhin betrifft die Erfindung einen Reibbelag-Rohling zur Herstellung eines oben beschriebenen erfindungsgemässen Synchronrings, wobei im Reibbelag-Rohling der Dicke D und Breite B in einem vorgebbaren Bereich eine makrogeometrische Nut derart ausgebildet ist, dass im Bereich der makrogeometrischen Nut ein Reibbelag vollständig entfernt ist. Erfindungsgemäss ist der Reibbelag-Rohling durch den Reibbelag mit Breite b und einen an den Reibbelag angrenzenden, durchgehend verbindenden Rand mit Randbreite gebildet.

Besonders bevorzugt ist der Reibbelag-Rohling derart ausgebildet, dass sich im Einbauzustand des mit dem Reibbelag-Rohling versehenen Synchronrings die makrogeometrische Nut konisch unter einem Reibwinkel in Richtung der axialen Synchronringachse erstreckt.

Dabei kann in einem anderen Ausführungsbeispiel der Reibbelag-Rohling auch derart ausgebildet sein, dass sich im Einbauzustand des mit dem Reibbelag-Rohling versehenen Synchronrings die makrogeometrische Nut schräg unter einem Neigungswinkel zur Synchronringachse erstreckt.

Im Speziellen kann zusätzlich zur makrogeometrischen Nut eine Vorratstasche zur Aufnahme und / oder Speicherung eines Fluids vorgesehen sein, und / oder es kann eine Durchflussfurche zwischen einer ersten axialen Begrenzungsfläche und einer zweiten axialen Begrenzungsfläche) in einer Oberfläche des Reibbelags vorgesehen sein, durch der Abtransport bzw. Abtransport von Fluid, z.B. von Schmieröl bzw. die Speicherung von Schmieröl noch weiter optimierbar ist.

Bevorzugt ist der Reibbelag-Rohling in der Praxis aus einem Verbundwerkstoff, im speziellen aus einem mit einem Harz versetzten bzw. verstärkten Karbonwerkstoff, insbesondere aus einem gewebten und / oder geflochtenen und / oder anders gefertigten Karbonwerkstoff aufgebaut.

Schliesslich betrifft die Erfindung des weiteren ein Verfahren zur Herstellung eines erfindungsgemässen Synchronrings unter Verwendung eines oben beschriebenen Reibbelags. Das erfindungsgemässe Verfahren umfasst dabei die folgenden Schritte:
Bereitstellung eines Synchronringkörpers und des Reibbelag-Rohlings der Dicke D und Breite B, wobei der Reibbelag-Rohling durch einen eine makrogeometrische Nut umfassenden Reibbelag mit Breite b und einen an den Reibbelag angrenzenden, durchgehend verbindenden Rand mit Randbreite gebildet wird.
Die Verbindung des Reibbelag-Rohlings mit einer Reibfläche des Synchronringkörpers und eine anschliessende Entfernung des Randes von dem mit dem Synchronringkörper verbundenen Reibbelag-Rohling.
Erfindungsgemäss wird der Rand dabei derart entfernt, dass am Synchronringkörper im Bereich der makrogeometrischen Nut der Reibbelag vollständig entfernt ist.
Die Verbindung des Reibbelag-Rohlings mit dem Synchronringkörper erfolgt bevorzugt insbesondere mittels eines Klebers und / oder eines Pressvorganges, im Speziellen mittels eines heiss-isostatischen und / oder eines kalt-isostatischen Pressvorgangs.
In einem für die Praxis besonders wichtigen Ausführungsbeispiel wird die makrogeometrische Nut vor der Verbindung des Reibbelag-Rohlings mit dem Synchronringkörper, aus dem Reibbelag-Rohling ausgestanzt und / oder ausgeschnitten und / oder herausgebrochen und / oder in anderer geeigneter Weise herausgearbeitet.
Auch der Rand wird nach der Verbindung des Reibbelag-Rohlings mit dem Synchronringkörper bevorzugt durch Schneiden und / oder Stanzen und / oder Brechen entfernt, kann jedoch aber auch mittels jeder anderen geeigneten Methode entfernt werden.
In speziellen Fällen kann zur Verbesserung des Abflusses von Schmieröl und / oder zur Erhöhung der Speicherkapazität von Schmieröl im Synchronring eine Vorratstasche und / oder eine Durchflussfurche, vor der Verbindung des Reibbelag-Rohlings mit dem Synchronringkörper aus dem Reibbelag-Rohling ausgestanzt und / oder ausgeschnitten und / oder herausgebrochen wird und / oder in die Oberfläche des Reibbelag-Rohlings eingepresst werden, wobei natürlich auch jede andere geeignete Methode zum Einsatz kommen kann, mit der Vorratstaschen oder Durchflussfurchen vorteilhaft in den Reibbelag-Rohling eingearbeitet werden.
Im Folgenden wird die Erfindung an Hand der schematischen Zeichnung näher erläutert. Es zeigen:
   - Fig. 1: einen aus dem Stand der Technik bekannter Synchronring mit aufgeklebtem Reibbelag;
   - Fig. 2: einen bekannter Reibbelag für einen Synchronring mit über Brücken zusammenhängenden Nuten;
   - Fig. 3: einen Reibbelag-Rohling für einen erfindungsgemässen Synchronring;
   - Fig. 4: einen erfindungsgemässen Synchronring mit Reibbelag-Rohling im Fertigungsstadium;
   - Fig. 5: einen bereits fertig gestellten erfindungsgemässen Synchronring;
   - Fig. 6: einen Schnitt gemäss Fig. 5 entlang der Schnittlinie I-I;
   - Fig. 7: ein spezielles Ausführungsbeispiel eines Reibbelags für einen erfindungsgemässen Synchronring;
   - Fig. 8: ein zweites spezielles Ausführungsbeispiel gemäss Fig. 7.

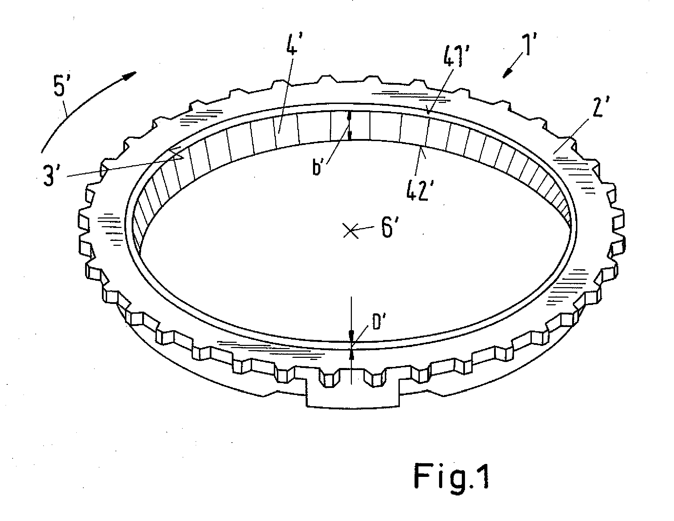

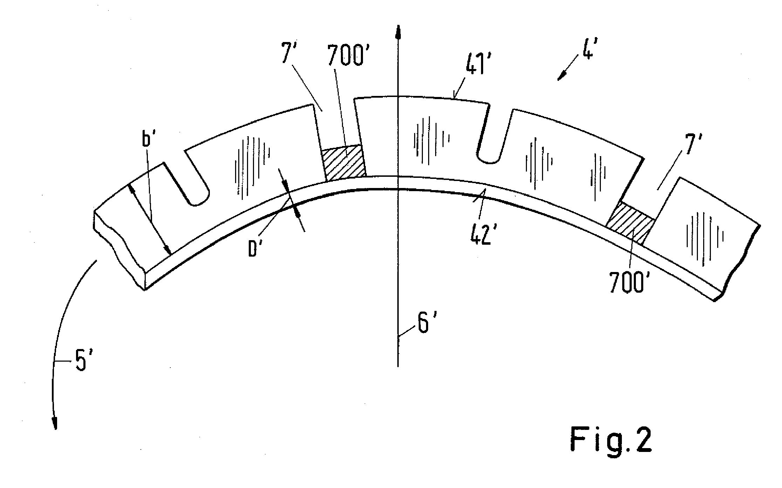

Zum besseren Verständnis der Erfindung soll im Folgenden anhand der Fig. 1 und Fig. 2 kurz ein aus dem Stand der Technik bekannter Synchronring mit aufgeklebtem Reibbelag bzw. ein spezieller bekannter Reibbelag mit über Brücken zusammenhängenden Nuten diskutiert werden.

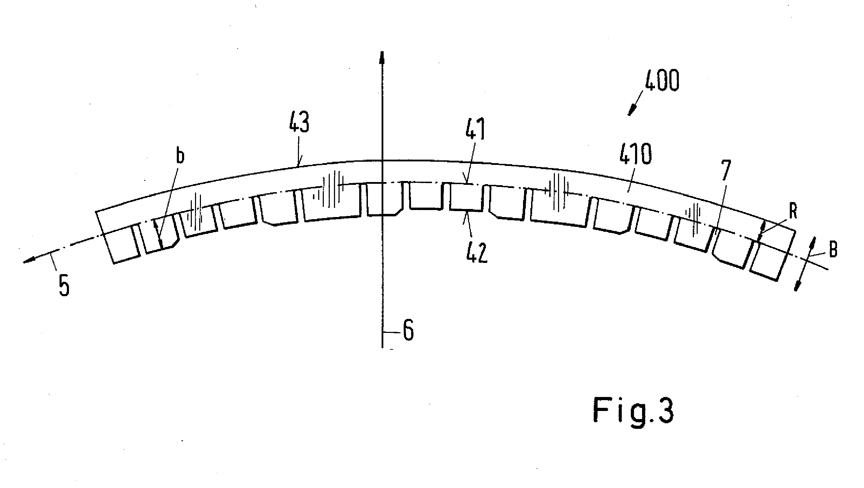

Zur Unterscheidung des Standes der Technik, wie er in den Fig. 1 und Fig. 2 dargestellt ist, von der vorliegenden Erfindung, die in speziellen Ausführungsbeispielen anhand der Fig. 3 bis Fig. 8 diskutiert werden wird, sind die Bezugszeichen in den Fig. 1 und Fig. 2, die sich auf bekannte Merkmale beziehen, mit einem Hochkomma versehen, während Bezugszeichen, die sich auf Merkmale der vorliegenden Erfindung beziehen nicht mit einem Hochkomma versehen sind.

Zur kurzen Erläuterung des technischen Hintergrunds ist in Fig. 1 ein sehr einfaches Ausführungsbeispiel eines bekannten Synchronrings 1' dargestellt. Der Synchronring 1' der Fig. 1 besteht in bekannter Weise aus einem metallischen Synchronringkörper 2' mit einer inneren Reibfläche 3', auf die ein Reibbelag 4' aus einem mit Harz verstärkten Karbon Werkstoff aufgeklebt ist.

Der Reibbelag 4' wurde aus einer grösseren Matte der Dicke D' in der für den Synchronringkörper 2' passenden Breite b' herausgeschnitten und sodann unter erhöhter Temperatur unter Verwendung eines geeigneten Klebers, der z.B. zuvor auf eine auf den Synchronringkörper 2' aufzuklebende Seite des Reibbelags 4' aufgetragen wurde, unter hohem Druck auf den Synchronringkörper 2' aufgeklebt.

Im Einbauzustand erstreckt sich dann der auf den Synchronringkörper 2' aufgeklebte Reibbelag 4' unter einem vorgebbaren Reibwinkel konisch in Umfangsrichtung 5' um die Synchronringachse 6'.

Der Reibbelag 4' ist ein sehr einfach strukturierter Reibbelag 4' der keinerlei Nuten oder Vorratstaschen für eine Schmieröl aufweist, so dass der Synchronring 1' der Fig. 1 stärkeren Belastungen im Betriebszustand vermutlich kaum standhalten wird.

Dem gegenüber bedeutet der Reibbelag 4' der Fig. 2, der analog zu Fig. 1 ebenfalls nach dem zuvor beschriebenen Verfahren auf einen Synchronringkörper 2' aufgeklebt werden kann, bereits eine erhebliche Verbesserung. Ein solcher Reibbelag 4' wurde bereits früher z.B. in der WO 2005/036006 A1 vorgeschlagen.

Der Reibbelag 4' der in Fig. 2 ausschnittweise vor dem Aufkleben auf den in Fig. 2 nicht dargestellten Synchronringkörper 2' gezeigt ist, hat makrogeometrische Nuten 7', die über die gesamte Breite des Reibbelags 4' als durchgehende Nuten 7' vorgesehen sind, die jedoch zumindest abschnittsweise nicht in der vollen Dicke D' des Reibbelags 4' ausgebildet sind. Das heisst, in den Nuten 7' sind Bereiche in Form von Brücken 700' vorgesehen, so dass der Streifen des Reibbelags 4', der auf einen Synchronringkörper 2' als Reibbelag 4' aufgeklebten werden soll, über die Nuten 7' durch die Brücken 700' immer noch zusammenhängt, so dass der Streifen trotz der Nuten 7' nicht in einzelne Reibbelagssegmente zerfällt, sondern zusammenhängend und als ganzes mit dem Synchronringkörper 2' verklebt werden kann.

Zur Speicherung von zusätzlichem Schmieröl, mit dem unter anderem aber nicht nur die Kühlung des Synchronrings 1' verbessert werden kann, sind darüber hinaus noch Vorratstaschen 8' für ein Fluid, z.B. für eine Schmieröl vorgesehen.

Die Nachteile dieser aus dem Stand der Technik bekannten Lösung bezüglich der hydrodynamischen Eigenschaften, der Speicher und Kühlkapazität für Schmieröl sind dem Fachmann ohne weiteres klar und wurden im einleitenden Teil der Beschreibung im übrigen bereits ausführlich erläutert.

In Fig. 3 ist schematisch ein Reibbelag-Rohling 400 für einen erfindungsgemässen Synchronring 1 dargestellt. Der erfindungsgemässe Reibbelag-Rohling der Fig. 3 zur Herstellung eines Synchronrings 1 hat eine Dicke D und eine Breite B. In einem vorgebbaren Bereich, zwischen den axialen Begrenzungsflächen 41 und 42, die im fertigen Zustand des Synchronrings 1 die axialen Begrenzungsflächen 41, 42 des Rebbelags 4 bilden werden, ist eine Vielzahl von makrogeometrische Nuten 7 zur Durchleitung bzw. zur Speicherung von Schmieröl vorgesehen. An die axiale Begrenzungsfläche 41 schliesst sich ein durchgehend verbindender Rand 410 an, der eine Randbreite R hat. Die Gesamtbreite B des Reibbelag-Rohlings 400 ergibt sich somit als Summe der Breite b des späteren Reibbelags 4 und der Randbreite R des Randes 410.

Durch den durchgehend verbindenden Rand 410 zerfällt der Reibbelag-Rohling 400 nicht in einzelne Reibbelagssegmente, die einzeln unmöglich zuverlässig auf einen zu beschichtenden Synchronringkörper 2 aufgeklebt werden könnten.

Dadurch, dass der erfindungsgemässe Reibbelag-Rohling 400 mit dem Rand 410 ausgestattet ist, kann der Reibbelag-Rohling 400 problemlos, wie im Prinzip aus dem Stand der Technik bekannt, als ganzes auf den Synchronringkörper 2 eines Synchronrings 1 aufgeklebt werden.

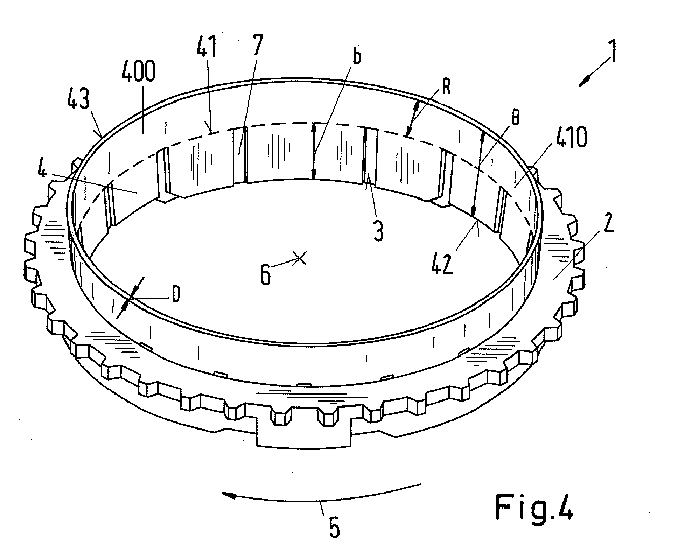

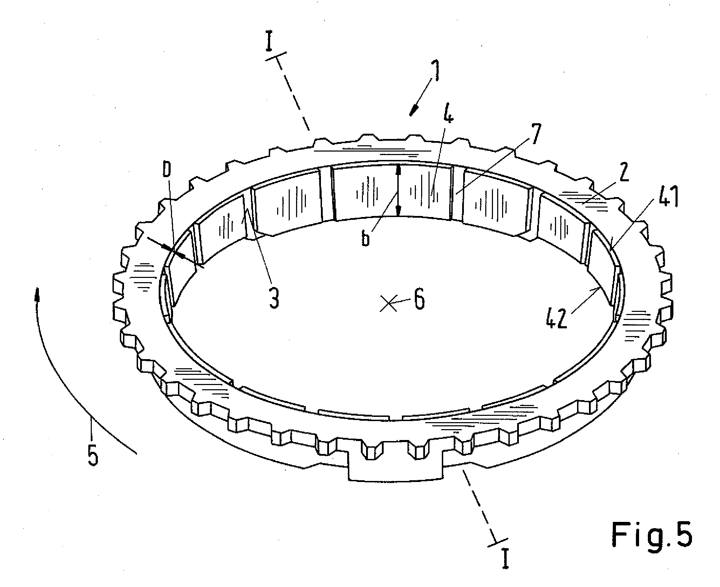

Zur Erläuterung des erfindungsgemässen Herstellungsverfahrens eines Synchronrings 1, eigenen sich im besonderen die Darstellungen der Fig. 4 und Fig. 5, die einen erfindungsgemässen Synchronring 1 mit Reibbelag-Rohling 400 im Fertigungsstadium zeigen.

Der Reibbelag-Rohling 400 ist bereits mit dem Synchronringkörper 2 auf einer Reibfläche 3 des Synchronrings 1 verklebt. Dabei wurde der Reibbelag-Rohling 400 so mit der Reibfläche 3 verklebt, dass der Rand 410 in seiner vollen Breite R nicht mit der Reibfläche 3 in klebendem Kontakt ist. Vielmehr ist nur der Bereich des Reibbelag-Rohlings 400, der später den Reibbelag 4 bilden soll und die makrogeometrischen Nuten 7 enthält, unmittelbar mit der Reibfläche 3 verklebt.

Das heisst, der Reibbelag-Rohling 400 ist nur im Bereich zwischen der ersten axialen Begrenzungsfläche 41 und er zweiten axialen Begrenzungsfläche 42, die später den Reibbelag 4 axial begrenzen werden, mit der Reibfläche 3 verklebt, während der Rand 410 des Reibbelag-Rohlings 400 in seiner vollen Breite R in axialer Richtung über den Synchronringkörper 2 hinaus steht.

Zu dem fertigen Synchronring 1, wie er schematisch in Fig. 5 dargestellt ist, gelangt man erfindungsgemäss dadurch, dass der Rand 410 in seiner vollen Breite R nach dem Aufkleben auf den Synchronringkörper 2, wie unter Fig. 4 erläutert, entfernt wird. Das kann durch einen Stanzvorgang, durch Abschneiden des Randes 410 entlang der ersten axialen Begrenzungsfläche 41, durch Brechen des Randes 410 entlang der ersten axialen Begrenzungsfläche 41 oder durch jede andere geeignete Massnahme geschehen, mit der der Rand 410 zuverlässig entfernt werden kann.

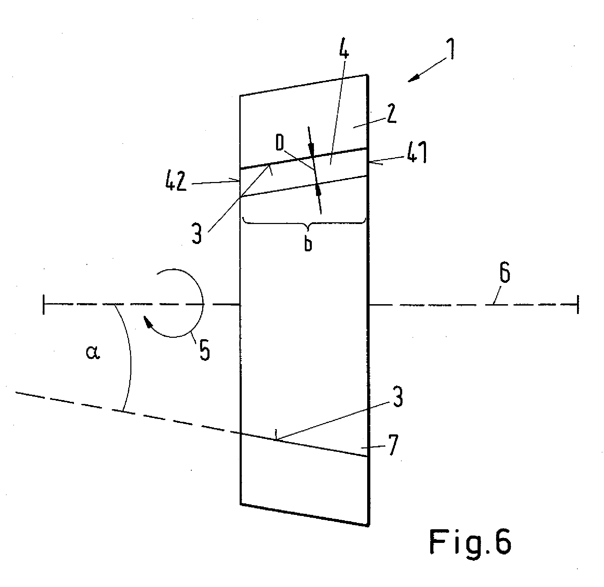

Zur Verdeutlichung ist in Fig. 6 noch ein Schnitt gemäss Fig. 5 entlang der Schnittlinie I-I dargestellt. Dabei ist der Schnitt gemäss Fig. 5 gerade so gewählt, dass in Fig. 6 darstellungsgemäss oben der Schnitt durch den Reibbelag 4, der durch die erste axiale Begrenzungsfläche 41 und die zweite axiale Begrenzungsfläche 42 in axialer Richtung begrenzt ist, verläuft, während auf der darstellungsgemäss unten gegenüberliegenden Seite der Schnitt durch eine makrogeometrische Nut 7 verläuft. Es ist deutlich erkennbar, dass die makrogeometrische Nut 7 eines erfindungsgemässen Synchronrings 1 über die gesamte Breite b des Reibbelags 4 verläuft, ohne dass eine Brücke 700' vorhanden wäre, wie sie zum Beispiel zwingend bei den bekannten Reibbelägen 4' notwendig sind, was bei der Beschreibung der Fig. 2 bereits vorher eingehend erläutert wurde.

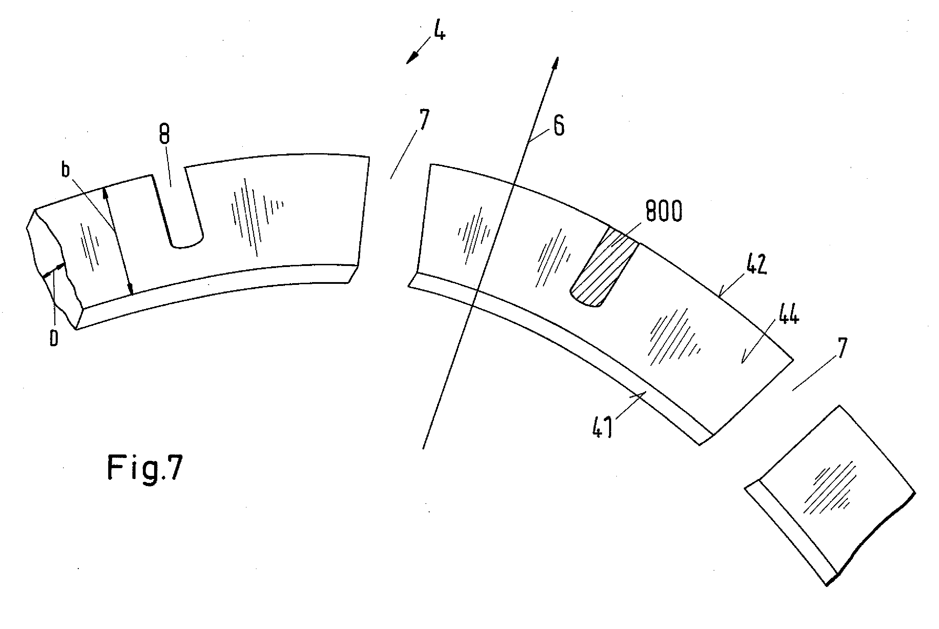

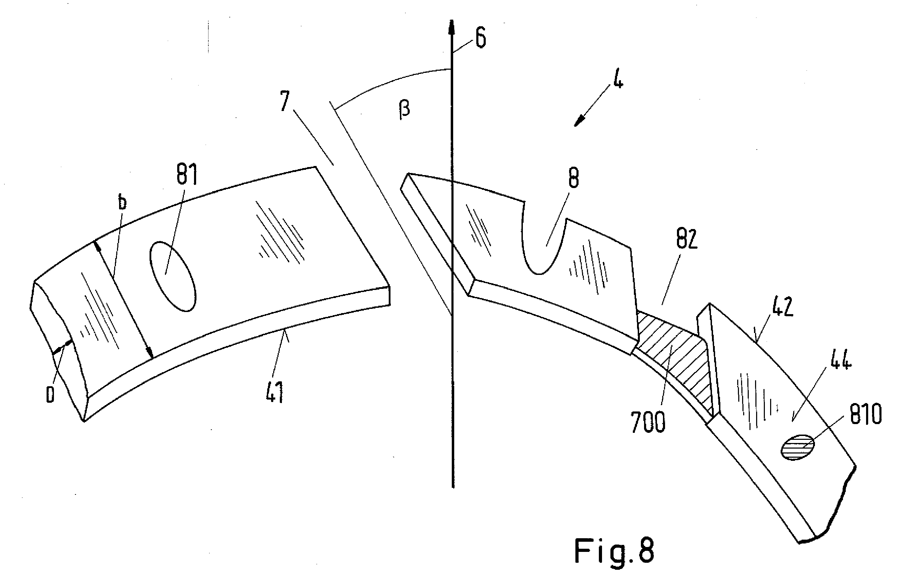

Die Fig. 7 und Fig. 8 zeigen schliesslich zwei spezielle Ausführungsformen von Reibbelägen 4 für einen erfindungsemässen Synchronring 1.

Um insbesondere die Speicherkapazität für Schmieröl, das z.B. einer noch weiter verbesserten Kühlung dienen kann, sind zusätzlich noch Vorratstaschen 8, 800, 81, 810 vorgesehen, die ganz unterschiedlich ausgestaltet sein können. So können z.B. Vorratstaschen 8 vorgesehen sein, die als Aussparung 8 an einem Rand des Reibbelags 4 vorgesehen sein können. Es können auch Vorratstaschen 81 in Form von Durchbohrungen 81 vorgesehen sein. Dabei können die Vorratstaschen aber auch zum Beispiel in Form von Eindellungen eingepresst sein, wie zum Beispiel die in die Oberfläche 44 des Reibbelags 4 eingepressten Bereiche 800 bzw. 810, in welchen ebenfalls Schieröl gespeichert werden kann, das dann zur Kühlung zur Verfügung steht und nicht mehr zum Aufbau eines hydrodynamischen Drucks zwischen den Reibpartnern.

Die Fig. 8 zeigt dabei noch eine spezielle Möglichkeit der Anordnung der makrogeometrischen Nuten 7 im Reibbelag 4. Während die makrogeometrischen Nuten der Fig. 7 im wesentlichen parallel zur Synchronringachse 6 angeordnet sind, sind die makrogeometrischen Nuten 7 der Fig. 8 schräg unter einem Neigungswinkel β zur Synchronringachse 6 ausgerichtet.

Auch können natürlich zusätzlich Durchflussfurchen 82 mit Brücken 700 vorgesehen werden, wie in Fig. 8 exemplarisch dargestellt, und wie sie z.B. aus der WO 2005/036006 A1 an sich bekannt sind.

Es versteht sich, dass die makrogeometrische Nut 7 auch z.B. einen gebogen Verlauf haben kann oder in jeder anderen geeigneten Form ausgestaltet sein kann.

Es versteht sich darüber hinaus, dass alle in dieser Anmeldung explizit diskutierten Ausführungsbeispiele nur exemplarisch für die Erfindung zu verstehen sind und insbesondere auch alle geeigneten Kombinationen, die für spezielle Anwendungen vorteilhaft eingesetzt werden können, bzw. alle dem Fachmann nahe liegenden Weiterbildungen durch die Erfindung erfasst sind.

## Patentansprüche

1. Synchronring für eine Synchronisiereinrichtung eines Zahnräderwechselgetriebes, umfassend einen Synchronringkörper (2) mit einem an einer Reibfläche (3) vorgesehen Reibbelag (4) der Dicke (D), welcher Reibbelag (4) in einer vorgebbaren Breite (b) zwischen einer ersten axialen Begrenzungsfläche (41) des Reibbelags (4) und einer zweiten axialen Begrenzungsfläche (42) des Reibbelags (4) derart in Umfangsrichtung (5) um eine axiale Synchronringachse (6) des Synchronrings an der Reibfläche (3) vorgesehen ist, dass sich der Reibbelag (4) unter einem vorgebbaren Reibwinkel (α) konisch um die Synchronringachse (6) erstreckt, wobei im Reibbelag (4) zur Aufnahme und / oder zum Transport eines Fluids eine makrogeometrische Nut (7) derart vorgesehen ist, dass für das Fluid eine Strömungsverbindung zwischen der ersten axialen Begrenzungsfläche (41) und der zweiten axialen Begrenzungsfläche (42) durch die makrogeometrische Nut (7) geschaffen ist, **dadurch gekennzeichnet, dass** im Bereich der makrogeometrischen Nut (7) der Reibbelag (4) vollständig entfernt ist.

2. Synchronring nach Anspruch 1, wobei sich die makrogeometrische Nut (7) konisch unter dem Reibwinkel (α) in Richtung der axialen Synchronringachse (6) erstreckt.

3. Synchronring nach Anspruch 1 oder 2, wobei sich die makrogeometrische Nut (7) schräg unter einem Neigungswinkel (β) zur Synchronringachse (6) erstreckt.

4. Synchronring nach einem der vorangehenden Ansprüche, wobei eine Vorratstasche (8, 800, 81, 810) zur Aufnahme und / oder Speicherung des Fluids vorgesehen ist.

5. Synchronring nach einem der vorangehenden Ansprüche, wobei eine Durchflussfurche (82) zwischen der ersten axialen Begrenzungsfläche (41) und der zweiten axialen Begrenzungsfläche (42) in einer Oberfläche (44) des Reibbelags (4) vorgesehen ist.

6. Synchronring nach einem der vorangehenden Ansprüche, wobei der Reibbelag (4) aus einem Verbundwerkstoff, im speziellen aus einem mit einem Harz versetzten Karbonwerkstoff, insbesondere aus einem gewebten und / oder geflochtenen und / oder anders gefertigten Karbonwerkstoff aufgebaut ist und / oder wobei der Synchronringkörper (2) aus einem Stahl, vorzugsweise aus C55, C80 oder C80M Stahl, insbesondere aus C35 oder C45 Stahl gefertigt ist.

7. Reibbelag-Rohling zur Herstellung eines Synchronrings (1) nach einem der Ansprüche 1 bis 7, wobei im Reibbelag-Rohling der Dicke (D) und Breite (B) in einem vorgebbaren Bereich eine makrogeometrische Nut (7) derart ausgebildet ist, dass im Bereich der makrogeometrischen Nut (7) ein Reibbelag (4) vollständig entfernt ist, **dadurch gekennzeichnet, dass** der Reibbelag-Rohling durch den Reibbelag (4) mit Breite (b) und einen an den Reibbelag (4) angrenzenden, durchgehend verbindenden Rand (410) mit Randbreite (R) gebildet ist.

8. Reibbelag-Rohling nach Anspruch 7, wobei der Reibbelag-Rohling derart ausgebildet ist, dass sich im Einbauzustand des mit dem Reibbelag-Rohling versehenen Synchronrings (1) die makrogeometrische Nut (7) konisch unter einem Reibwinkel (α) in Richtung der axialen Synchronringachse (6) erstreckt.

9. Reibbelag-Rohling nach Anspruch 7 oder 8, wobei der Reibbelag-Rohling derart ausgebildet ist, dass sich im Einbauzustand des mit dem Reibbelag-Rohling versehenen Synchronrings (1) die makrogeometrische Nut (7) schräg unter einem Neigungswinkel (β) zur Synchronringachse (6) erstreckt.

10. Reibbelag-Rohling nach einem der Ansprüche 7 bis 9, wobei eine Vorratstasche (8, 800, 81, 810) zur Aufnahme und / oder Speicherung eines Fluids vorgesehen ist, und / oder wobei eine Durchflussfurche (82) zwischen einer ersten axialen Begrenzungsfläche (41) und einer zweiten axialen Begrenzungsfläche (42) in einer Oberfläche (44) des Reibbelags (4) vorgesehen ist.

11. Reibbelag-Rohling nach einem der Ansprüche 7 bis 10, wobei der Reibbelag-Rohling aus einem Verbundwerkstoff, im speziellen aus einem mit einem Harz versetzten Karbonwerkstoff, insbesondere aus einem gewebten und / oder geflochtenen und / oder anders gefertigten Karbonwerkstoff aufgebaut ist.

12. Verfahren zur Herstellung eines Synchronrings (1) nach einem der Ansprüche 1 bis 6 unter Verwendung eines Reibbelag-Rohlings (400) nach einem der Ansprüche 7 bis 11, welches Verfahren die folgenden Schritte umfasst:
- Bereitstellung eines Synchronringkörpers (2) und des Reibbelag-Rohlings (400) der Dicke (D) und Breite (B), wobei der Reibbelag-Rohling (400) durch einen eine makrogeometrische Nut (7) umfassenden Reibbelag (4) mit Breite (b) und einen an den Reibbelag (4) angrenzenden, durchgehend verbindenden Rand (410) mit Randbreite (R) gebildet wird;
- Verbindung des Reibbelag-Rohlings (400) mit einer Reibfläche (3) des Synchronringkörpers (2);
- Entfernung des Randes (410) von dem mit dem Synchronringkörper (2) verbundenen Reibbelag-Rohling (400),
**dadurch gekennzeichnet, dass** der Rand (410) derart entfernt wird, dass am Synchronringkörper(2) im Bereich der makrogeometrischen Nut (7) der Reibbelag (4) vollständig entfernt ist.

13. Verfahren nach Anspruch 12, wobei die Verbindung des Reibbelag-Rohlings (400) mit dem Synchronringkörper (2) insbesondere mittels eines Klebers und / oder eines Pressvorganges, im speziellen mittels eines heiss-isostatischen und / oder eines kalt-isostatischen Pressvorgangs hergestellt wird.

14. Verfahren nach einem der Ansprüche 12 oder 13, wobei die makrogeometrische Nut (7) vor der Verbindung des Reibbelag-Rohlings (400) mit dem Synchronringkörper (2) aus dem Reibbelagrohling (400) ausgestanzt und / oder ausgeschnitten und / oder herausgebrochen wird.

15. Verfahren nach einem der Ansprüche 12 bis 14, wobei der Rand (410) nach der Verbindung des Reibbelag-Rohlings (400) mit dem Synchronringkörper (2) durch Schneiden und / oder Stanzen und / oder Brechen entfernt wird, und / oder wobei eine Vorratstasche (8, 800, 81, 810) und / oder eine Durchflussfurche (82) vor der Verbindung des Reibbelag-Rohlings (400) mit dem Synchronringkörper (2) aus dem Reibbelag-Rohling (400) ausgestanzt und / oder ausgeschnitten und / oder herausgebrochen wird und / oder in die Oberfläche des Reibbelag-Rohlings eingepresst wird.
